# EUROPÄISCHE PATENTSCHRIFT

(11) **EP 2 852 788 B1**
(45) Veröffentlichungstag und Bekanntmachung des Hinweises auf die Patenterteilung: **29.04.2020**
(21) Anmeldenummer: 13722457.2
(22) Anmeldetag: 15.05.2013
(51) Int. Cl.: F21S 41/147, F21S 41/16, F21S 41/675, F21K 9/64, F21Y 115/30, F21Y 115/10, G02B 26/10, F21V 5/00, F21V 9/30

(54) **BELEUCHTUNGSVORRICHTUNG FÜR EIN KRAFTFAHRZEUG UND KONVERTIERUNGSSCHICHT ZUR VERWENDUNG IN EINER SOLCHEN BELEUCHTUNGSVORRICHTUNG**
ILLUMINATION DEVICE FOR A MOTOR VEHICLE AND CONVERSION LAYER FOR USE IN SAID TYPE OF ILLUMINATION DEVICE
DISPOSITIF D'ÉCLAIRAGE CONÇU POUR UN VÉHICULE AUTOMOBILE ET COUCHE DE CONVERSION DESTINÉE À ÊTRE UTILISÉE DANS UN TEL DISPOSITIF D'ÉCLAIRAGE

(30) Priorität: 22.05.2012 DE 102012208566
(43) Veröffentlichungstag der Anmeldung: 01.04.2015
(73) Patentinhaber: Bayerische Motoren Werke Aktiengesellschaft, 80809 München (DE)
(72) Erfinder: ERDL, Helmut, 83126 Flintsbach (DE); HANAFI, Abdelmalek, 80686 München (DE)
(86) Internationale Anmeldenummer: PCT/EP2013/059979
(87) Internationale Veröffentlichungsnummer: WO 2013/174683

(56) Entgegenhaltungen:
- EP-A1- 2 233 828
- EP-A2- 1 515 368
- WO-A1-2010/067291
- DE-A1- 10 315 133
- JP-A- 2011 142 000
- JP-A- 2013 026 094
- US-A1- 2011 249 460

## Beschreibung

Die Erfindung betrifft eine Beleuchtungsvorrichtung für ein Kraftfahrzeug gemäß dem Oberbegriff des Anspruchs 1.

Um mit einer Kraftfahrzeug-Beleuchtungsvorrichtung Licht in einem vorbestimmten Wellenlängenbereich und insbesondere Weißlicht zu generieren, werden sog. Konvertierungsschichten verwendet, welche ein geeignetes Konvertierungsmaterial (wie z.B. Phosphor) umfassen. Zur Konvertierung des Lichts wird in der Regel ein über eine Lichtquelle generiertes Lichtbündel auf die Konvertierungsschicht gerichtet, wodurch ein Lichtbündel in einem anderen Wellenlängenbereich erzeugt wird. Dabei besteht das Problem, dass durch Streueffekte in der Konvertierungsschicht eine starke Aufweitung des Lichtbündels erfolgt, so dass die Auflösung der mit der Beleuchtungsvorrichtung erzeugten Lichtverteilung verschlechtert wird.

In der Druckschrift WO 2010/058323 A1 ist eine Beleuchtungsvorrichtung für ein Kraftfahrzeug beschrieben, bei der die Ausdehnung eines farbkonvertierten Laserstrahlbündels über eine Blende an der Konvertierungsschicht begrenzt wird. Hierbei ist es nachteilhaft, dass die Verwendung einer Blende zu einem hohen Lichtstromverlust führt, welcher in der Fahrzeugbeleuchtungstechnik oftmals nicht akzeptabel ist.

Die Druckschrift US 2011/249460 A1 offenbart eine Beleuchtungsvorrichtung für ein Kraftfahrzeug, bei der eine Konvertierungsschicht in der Form eines Rahmens mit einer Vielzahl von Löchern vorgesehen ist. In den Löchern befindet sich Phosphor als Konvertierungsmaterial.

Das Dokument EP 2 233 828 A1 zeigt eine Beleuchtungsvorrichtung für ein Kraftfahrzeug mit einer Vielzahl von Licht emittierenden Elementen und einer Wellenlängen-Konvertierungsschicht mit einem Abschnitt reduzierter Dicke. Zwischen den Licht emittierenden Elementen können Brückenabschnitte vorgesehen sein.

In dem Dokument EP 1 515 368 A1 ist eine Beleuchtungsvorrichtung für ein Kraftfahrzeug mit einer Vielzahl von Licht emittierenden Elementen gezeigt, welche ein Lichtverteilungsmuster mit einer vorgegebenen Hell-Dunkel-Grenze bilden.

In der Druckschrift DE 103 15 133 A1 ist eine Beleuchtungsvorrichtung für ein Kraftfahrzeug mit einer Mehrzahl von in einem Gitter verteilt angeordneten Halbleiterlichtquellen offenbart. Durch das Gitter erstreckt sich ein Abschatter zur Erzeugung einer scharfen Hell-Dunkel-Grenze in der Lichtverteilung.

Das Dokument WO 2010/067291 A1 zeigt eine Beleuchtungsvorrichtung mit LEDs und einer beweglichen Wellenlängen-Konvertierungseinrichtung. Die Wellenlängen-Konvertierungseinrichtung umfasst mehrere Konvertierungselemente, die in einem beweglichen Halter angeordnet sind.

Die Druckschrift JP 2011 142000 A beschreibt eine Beleuchtungsvorrichtung mit einer Lichtquelle und einem Phosphorelement, das mit dem Licht der Lichtquelle angeregt wird, um Licht mit einer größeren Wellenlänge als diejenige der Lichtquelle abzustrahlen. Das Phosphorelement umfasst eine Vielzahl von Zellen, welche durch Wände mit hohem Reflexionsgrad voneinander getrennt sind.

Aufgabe der Erfindung ist es, eine Beleuchtungsvorrichtung für ein Kraftfahrzeug zu schaffen, bei der das Licht über eine Konvertierungsschicht farbkonvertiert wird und welche dennoch eine hohe Auflösung der generierten Lichtverteilung gewährleistet.

Diese Aufgabe wird durch die Beleuchtungsvorrichtung gemäß Patentanspruch 1 gelöst. Weiterbildungen der Erfindung sind in den abhängigen Ansprüchen definiert.

Die erfindungsgemäße Beleuchtungsvorrichtung umfasst eine Lichtquelle aus einer Anzahl von Halbleiterdioden (d.h. zumindest eine Halbleiterdiode), welche Licht in einem ersten vorbestimmten Wellenlängenbereich erzeugen. Das generierte Licht ist vorzugsweise monochromatisch und liegt beispielsweise im blauen bzw. violetten Wellenlängenbereich (d.h. bei 450 nm bzw. 405 nm). Der Begriff des Wellenlängenbereichs ist somit weit zu verstehen und kann ggf. auch eine feste Wellenlänge betreffen. Die Beleuchtungsvorrichtung umfasst eine Konvertierungsschicht, auf die ein aus dem Licht der Lichtquelle erzeugtes Lichtbündel fällt und durch welche das Lichtbündel in ein konvertiertes Lichtbündel gewandelt wird, indem das Licht des Lichtbündels über ein Konvertierungsmaterial der Konvertierungsschicht in einen zweiten vorbestimmten Wellenlängenbereich konvertiert wird. In einer besonders bevorzugten Ausführungsform ist die Konvertierung dabei derart ausgestaltet, dass das Licht in Weißlicht gewandelt wird.

Die erfindungsgemäße Beleuchtungsvorrichtung ist dazu ausgelegt, dass aus dem konvertierten Lichtbündel eine vorbestimmte Lichtverteilung in einem Abstand von der Beleuchtungsvorrichtung und insbesondere im Fernfeld der Beleuchtungsvorrichtung generiert wird. Unter Fernfeld ist die Lichtverteilung in einem Abstand von der Beleuchtungsvorrichtung zu verstehen, der wesentlich größer als die Abmessungen der Beleuchtungsvorrichtung ist und insbesondere im Bereich von 25 m und ggf. mehr vor der Beleuchtungsvorrichtung liegt. Unter einem Lichtbündel ist ein im Winkel bzw. im Raum begrenztes Bündel aus Lichtstrahlen zu verstehen, wobei die Lichtstrahlen im Bündel im Wesentlichen parallel bzw. auch auseinander oder zusammenlaufen können. Das Lichtbündel kann dabei durch die Lichtquelle selbst bzw. ggf. auch durch eine oder mehrere weitere optische Einrichtungen erzeugt werden.

In der erfindungsgemäßen Beleuchtungsvorrichtung ist in zumindest einem Teilbereich der Fläche der Konvertierungsschicht (d.h. gesehen in Draufsicht auf die Konvertierungsschicht) eine Struktur aus einer oder mehreren Wänden mit einer vorbestimmten Tiefe in Richtung der Dicke der Konvertierungsschicht vorgesehen ist. Mit dieser Struktur kann eine geeignete Begrenzung der Lichtverteilung direkt über die Konvertierungsschicht erreicht werden. Hierdurch kann eine Lichtverteilung mit hoher Auflösung im Bereich der Struktur generiert werden.

Erfindungsgemäß ist die Struktur eine Gitterstruktur aus Gitterwänden mit einer vorbestimmten Tiefe in Richtung der Dicke der Konvertierungsschicht, d.h. die Struktur umfasst mehrere Wände in der Form von reflektierenden Gitterwänden und/oder lichtabsorbierenden Gitterwänden. Dabei wird durch die Gitterstruktur eine Vielzahl von aneinander angrenzenden Flächensegmenten gebildet, welche jeweils Konvertierungsmaterial enthalten und durch Gitterwände begrenzt sind. Die Flächensegmente können je nach Anwendungsfall ganz oder gegebenenfalls auch nur teilweise mit Konvertierungsmaterial gefüllt sein. Durch die Konvertierungsschicht mit der darin enthaltenen Gitterstruktur kann über die Flächensegmente ein auf die Konvertierungsschicht fallendes Lichtbündel geeignet in seiner Ausdehnung begrenzt werden, wodurch im Vergleich zu einer Konvertierungsschicht ohne Gitterstruktur scharf begrenzte Lichtverteilungen mit hoher Auflösung generiert werden können.

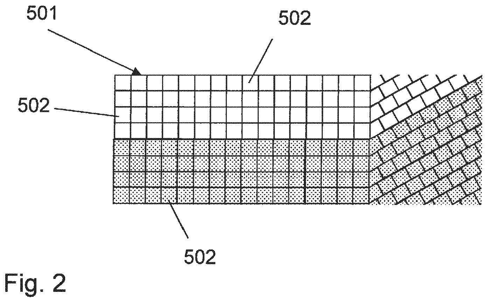

In der erfindungsgemäßen Beleuchtungsvorrichtung wird durch Gitterwände von mehreren aneinander angrenzenden Flächensegmenten der Gitterstruktur eine gerade Grenzlinie gebildet, welche in der vorbestimmten Lichtverteilung zumindest einen Abschnitt einer Hell-Dunkel-Grenze darstellt. Dabei wird durch eine horizontal verlaufende gerade Grenzlinie und eine daran anschließende schräg verlaufende Grenzlinie eine scharfe Hell-Dunkel-Grenze in einer Abblendlichtverteilung gebildet, wie in der detaillierten Beschreibung anhand von Fig. 2 näher erläutert wird.

In einer besonders bevorzugten Ausführungsform sind die Gitterwände zumindest eines Teils der Gitterstruktur und vorzugsweise der gesamten Gitterstruktur reflektierend, wodurch das in der Konvertierungsschicht gestreute Licht in dem entsprechenden Flächensegment konzentriert wird und im Gegensatz zur Blendentechnik keine Verluste in der Lichtstärke auftreten. Je nach Anwendungsfall können die die Gitterwände dabei diffus reflektierend bzw. auch spiegelnd ausgestaltet sein. Nichtsdestotrotz besteht ggf. auch die Möglichkeit, dass die Gitterwände zumindest eines Teils der Gitterstruktur lichtabsorbierend sind.

In einer weiteren bevorzugten Ausführungsform sind die Gitterwände zumindest eines Teils der Gitterstruktur aus metallischem Material gebildet oder weisen eine metallische Beschichtung auf. Ebenso können die Gitterwände aus Kunststoffmaterial mit oder ohne metallische Beschichtung ausgebildet sein.

Je nach Anwendungsfall können die einzelnen Flächensegmente unterschiedliche Formen aufweisen. In bevorzugten Ausgestaltungen sind die Flächensegmente in Draufsicht auf die Konvertierungsschicht Vielecke, insbesondere Rechtecke und/oder Quadrate und/oder Dreiecke und/oder Rauten und/oder Sechsecke. Hierdurch wird ein besonders hoher Füllfaktor des Gitters innerhalb der Konvertierungsschicht erreicht.

Die räumlichen Abmessungen der Flächensegmente in Draufsicht können je nach erwünschter Auflösung der mit der Beleuchtungsvorrichtung generierten Lichtverteilung variieren. Vorzugsweise liegt die maximale Ausdehnung eines jeweiligen Flächensegments in Draufsicht auf die Konvertierungsschicht zwischen 5 µm und 500 µm.

Vorzugsweise wird die Wandstärke der Gitterwände der Gitterstruktur im Vergleich zu der Ausdehnung der Flächensegmente sehr gering gewählt, um hierdurch Dunkelzonen in der generierten Lichtverteilung zu vermeiden. Insbesondere beträgt die Wandstärke der Gitterwände 20% oder weniger der maximalen Ausdehnung der Flächensegmente in Draufsicht auf die Konvertierungsschicht.

Die Tiefe der Gitterwände kann je nach Ausgestaltung variieren und entspricht vorzugsweise der Dicke der Konvertierungsschicht, kann jedoch gegebenenfalls auch geringer oder größer sein. Vorzugsweise liegt die Tiefe der der Wand oder Wände zwischen 50 µm und 500 µm.

In einer besonders bevorzugten Ausführungsform wird als Lichtquelle in der erfindungsgemäßen Beleuchtungsvorrichtung eine Laserlichtquelle eingesetzt. Das heißt, die Halbleiterdioden umfassen eine oder mehrere und insbesondere ausschließlich Laserdioden. Hierdurch kann eine Lichtverteilung mit sehr hoher Lichtstärke erzeugt werden. Die Laserdioden weisen vorzugsweise eine jeweilige Maximalleistung von mindestens 1 W und insbesondere zwischen 1,5 und 5 W auf.

Als Materialien für die Konvertierungsschicht können an sich bekannte Zusammensetzungen verwendet werden. In einer besonders bevorzugten Ausführungsform ist die Konvertierungsschicht eine Phosphor-Konvertierungsschicht, welche insbesondere Nitrid-Phosphor oder Oxid-Nitrid-Phosphor oder Cerium-dotierten YAG-Phosphor umfasst. Diese Materialien werden insbesondere zur Konvertierung eines blauen bzw. violetten Lichtbündels in Weißlicht verwendet.

In einer weiteren, besonders bevorzugten Ausführungsform ist zwischen Lichtquelle und Konvertierungsschicht ein Scanner vorgesehen, der im Betrieb die Lage des Lichtbündels verändert und hierdurch einen durch das Lichtbündel erzeugten Lichtspot zur Generierung der vorbestimmten Lichtverteilung bewegt. Der Scanner kann dabei als herkömmlicher Zeilenscanner ausgestaltet sein, der mit einer festen Frequenz das Lichtbündel und damit den Lichtspot zeilenweise bewegt. In diesem Fall wird zur Erzeugung der vorbestimmten Lichtverteilung die Lichtquelle an- bzw. abgeschaltet bzw. in der Intensität variiert.

Anstatt eines Zeilenscanners kann in der erfindungsgemäßen Vorrichtung auch ein sog. Vektorscanner eingesetzt werden, mit dem die Scan-Geschwindigkeit, mit der der Lichtspot bewegt wird, und/oder der Scan-Pfad, entlang dem der Lichtspot bewegt wird, variierbar sind und zur Generierung der vorbestimmten Lichtverteilung mit einem entsprechenden Steuermittel gesteuert werden. Der Scan-Pfad entspricht dem Bewegungsmuster des Lichtspots, das über die Veränderung der Lage des Lichtbündels erzeugt wird. Über eine entsprechende Definition eines Scan-Pfads kann dabei der Bereich begrenzt werden, in dem eine vorbestimmte Lichtverteilung vorliegt. Ferner kann durch mehrfaches Abfahren derselben Bereiche gemäß dem definierten Scan-Pfad die Lichtstärke in diesen Bereichen entsprechend erhöht werden.

In einer weiteren bevorzugten Ausführungsform der Erfindung umfasst die Beleuchtungseinrichtung eine optische Einrichtung in der Form einer Austrittsoptik, welche in Richtung des Strahlverlaufs des Lichtbündels hinter der Konvertierungsschicht vorgesehen ist und das konvertierte Lichtbündel entsprechend der vorbestimmten Lichtverteilung abbildet. Die optische Einrichtung kann durch eine oder mehrere Linsen und/oder einen oder mehrere Reflektoren gebildet sein.

Je nach Anwendungsfall kann die erfindungsgemäße Beleuchtungsvorrichtung verschiedene Funktionalitäten übernehmen. In einer Ausführungsform umfasst die Beleuchtungsvorrichtung einen Scheinwerfer. Ein Scheinwerfer zeichnet sich dadurch aus, dass er aktiv die Umgebung des Fahrzeugs ausleuchtet. Gegebenenfalls kann die erfindungsgemäße Beleuchtungsvorrichtung auch eine Signalleuchte umfassen, welche sich dadurch auszeichnet, dass sie lediglich zur Signalgebung für andere Verkehrsteilnehmer dient.

In einer bevorzugten Variante ist die Beleuchtungsvorrichtung als Scheinwerfer derart ausgestaltet, dass im Betrieb als vorbestimmte Lichtverteilung eine Abblendlichtcharakteristik generiert wird. Gegebenenfalls kann die Beleuchtungsvorrichtung auch derart ausgestaltet sein, dass sie im Betrieb als vorbestimmte Lichtverteilung eine Fernlichtcharakteristik generiert.

In einer weiteren Ausführungsform der erfindungsgemäßen Beleuchtungsvorrichtung unterscheidet sich das Konvertierungsmaterial und/oder die Dicke der Konvertierungsschicht in zumindest einem Teil der Flächensegmente von anderen Flächensegmenten. Hierdurch kann eine Lichtverteilung aus unterschiedlichen Farben bzw. Farbtemperaturen generiert werden.

Neben der erfindungsgemäßen Beleuchtungsvorrichtung betrifft die Erfindung ferner ein Kraftfahrzeug, welches eine oder mehrere der erfindungsgemäßen Beleuchtungsvorrichtungen umfasst.

Ein Ausführungsbeispiel der Erfindung wird nachfolgend anhand der beigefügten Figuren detailliert beschrieben.

Es zeigen:
- Fig. 1: eine schematische Darstellung einer Ausführungsform einer erfindungsgemäßen Beleuchtungsvorrichtung; und
- Fig. 2: eine Draufsicht auf die Konvertierungsschicht der Beleuchtungsvorrichtung aus Fig. 1.

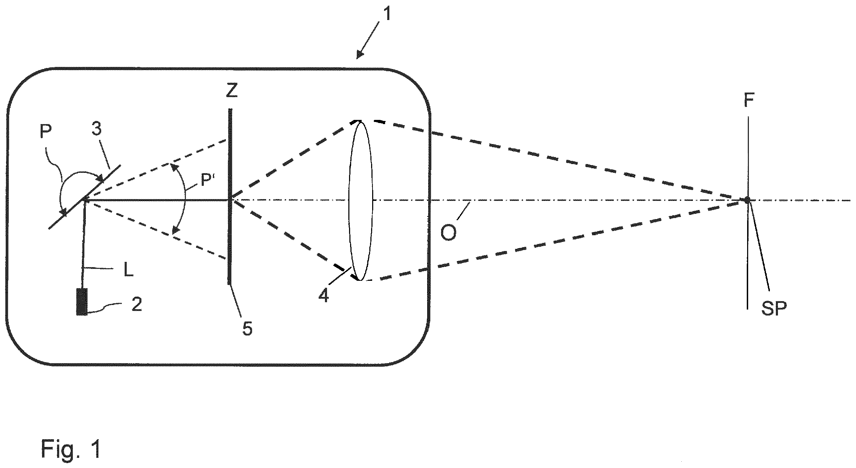

Fig. 1 zeigt in Seitenansicht eine erfindungsgemäße Beleuchtungsvorrichtung 1, bei der es sich um einen in einem Kraftfahrzeug (nicht gezeigt) verbauten Scheinwerfer handelt. Die Beleuchtungsvorrichtung 1 umfasst eine Lichtquelle 2 in der Form einer Laserdiode mit Vorsatzoptik, mit der ein Lichtbündel L mit hoher Leuchtdichte generiert wird. Das Lichtbündel L fällt auf einen lediglich schematisch angedeuteten Vektorscanner 3, der über ein geeignetes Reflektorelement durch dessen Verschwenkung das Lichtbündel in einen vorbestimmten Winkelbereich lenkt. Der Schwenkbereich des Scanners in der Blattebene ist durch den Doppelpfeil P und der damit korrespondierende Schwenkbereich des Lichtbündels L durch den Doppelpfeil P' angedeutet. Neben der Verschwenkung in der Blattebene, mit der die vertikale Position des Lichtbündels variiert wird, kann der Scanner auch in horizontaler Richtung verschwenkt werden, wodurch die Position des Lichtbündels in der Horizontalen verändert werden kann.

Der Vektorscanner wird mit einer (nicht gezeigten) Steuereinrichtung gesteuert, mit der zum einen die Geschwindigkeit der Bewegung des Lichtbündels in dem Schwenkbereich des Scanners und zum anderen auch der Bewegungspfad des Lichtbündels geeignet variiert bzw. eingestellt werden kann. Hierdurch unterscheidet sich der Vektorscanner von Zeilenscannern, welche lediglich eine konstante, zeilenweise Bewegung des Lichtbündels in einem vorbestimmten Scanbereich ermöglichen. Durch die Verwendung des Vektorscanners können auf einfache Weise beliebige vorbestimmte Lichtverteilungen mit der generiert werden. Nichtsdestotrotz kann in der erfindungsgemäßen Beleuchtungsvorrichtung anstatt des Vektorscanners auch ein Zeilenscanner verwendet werden. In diesem Fall wird die Lichtquelle zur Generierung der vorbestimmten Lichtverteilung während des Betriebs des Scanners geeignet an- und ausgeschaltet bzw. in der Leistung variiert.

Über die Laserlichtquelle 2 wird ein monochromatisches Lichtbündel erzeugt, welches nach Passieren des Scanners in der Zwischenbildebene Z fokussiert und dort in Weißlicht gewandelt wird. In der Ebene Z befindet sich hierzu eine Konvertierungsschicht mit einem darin integrierten Gitter. Diese Konvertierungsschicht stellt ein erfindungswesentliches Merkmal dar und wird weiter unten näher beschrieben. Durch die Konvertierungsschicht wird ein Weißlichtbündel erzeugt, dessen Ursprung eine Lichtfläche bzw. ein Lichtspot auf der Konvertierungsschicht ist. Diese Lichtfläche wird über eine Austrittsoptik in der Form einer Linse 4 im Fernfeld F der Beleuchtungsvorrichtung in einen Lichtspot SP gewandelt, der seine Lage entsprechend der Bewegung des Lichtbündels verändert. Fig. 1 zeigt dabei mit gestrichelten Linien den Stahlverlauf zur Generierung des Lichtspots SP im Falle, dass sich das Lichtbündel L gerade auf der optischen Achse O befindet.

Durch entsprechende Einstellung bzw. Variation der Scan-Geschwindigkeit bzw. des Bewegungs-Pfads des Lichtbündels L wird die erwünschte Lichtverteilung im Fernfeld F im Abstand von etwa 25 m generiert. Je nach erwünschter Lichtverteilung wird der Lichtspot SP in Bereichen mit hoher Lichtstärke mit langsamerer Scan-Geschwindigkeit bewegt. Alternativ oder zusätzlich kann der Lichtspot diese Bereiche auch öfters abfahren. Im Unterschied hierzu wird der Lichtspot in Bereichen mit geringerer erwünschter Lichtstärke schneller bewegt bzw. weniger häufig dorthin gelenkt.

Die Konvertierungsschicht 5 der Beleuchtungsvorrichtung der Fig. 1 umfasst ein Konvertierungsmaterial, welches das monochromatische Laserlicht in Weißlicht wandelt. In der hier beschriebenen Ausführungsform wird hierzu ein geeignetes Phosphormaterial verwendet. Aufgrund von Streueffekten innerhalb der Konvertierungsschicht besteht bei herkömmlichen Schichten das Problem, dass durch die Konvertierungsschicht eine starke Aufweitung des Lichtbündels erfolgt, so dass eine große Lichtfläche auf der Konvertierungsschicht erzeugt wird, was wiederum die Auflösung der im Fernfeld generierten Lichtverteilung vermindert. Hierdurch wird die Erzeugung einer sehr kontrastreichen Lichtverteilung, beispielsweise mit scharfen Hell-Dunkel-Grenzen, erschwert.

Zur Lösung dieses Problems enthält die Konvertierungsschicht 5 der Beleuchtungsvorrichtung der Fig. 1 eine Gitterstruktur, welche aus der Fig. 2 ersichtlich ist. Diese Figur zeigt eine Draufsicht auf die Konvertierungsschicht, welche die Form eines Rechtecks aufweist, das z.B. eine Größe von 5 cm × 10 cm hat. Man erkennt, dass die rechteckige Konvertierungsschicht eine Gitterstruktur 501 enthält, welche aus dünnen Verstrebungen gebildet ist, die eine vorbestimmte Tiefe in Richtung senkrecht zur Blattebene aufweisen. Die Tiefe der Verstrebungen liegt vorzugsweise im Bereich der Dicke der Konvertierungsschicht, die in der Regel zwischen 50 µm und 500 µm liegt. Die Gitterstruktur besteht somit aus einer Vielzahl von Gitterwänden, durch welche in der Ausführungsform der Fig. 2 aneinander angrenzende und hauptsächlich quadratische Flächensegmente 502 gebildet werden, welche aus Übersichtlichkeitsgründen nur zum Teil mit diesem Bezugszeichen bezeichnet sind. Je nach gewünschter Auflösung der Lichtverteilung kann die Größe der einzelnen quadratischen Flächensegmente geeignet gewählt werden. In einer bevorzugten Ausführungsform haben die Quadrate eine Kantenlänge zwischen 5 µm und 500 µm. Die Dicke der Wände der Gitterstruktur ist dabei wesentlich geringer als die Abmessungen der Quadrate. Als Materialien für die Gitterwände kommen insbesondere Metall (z.B. Aluminium) bzw. Kunststoff mit einer metallischen Beschichtung zum Einsatz.

Die quadratischen Flächensegmente verlaufen in der Draufsicht der Fig. 2 zunächst von links nach rechts in horizontaler Richtung und knicken dann schräg nach oben ab, wobei dieser Verlauf einer Abblendlichtcharakteristik entspricht, welche mit der Beleuchtungsvorrichtung generiert werden kann. Gemäß Fig. 2 sind die Flächensegmente in der unteren Hälfte der Konvertierungsschicht gepunktet angedeutet, wodurch zum Ausdruck kommt, dass bei der Generierung der Lichtverteilung das Lichtbündel über den Vektorscanner 3 derart bewegt wird, dass nur die gepunkteten Quadrate beleuchtet werden. Auf diese Weise wird eine scharfe Hell-Dunkel-Grenze in der Abblendlichtverteilung gebildet. Der gepunktete Bereich der Gitterstruktur entspricht somit in seiner Form der auf der Straße durch die Beleuchtungsvorrichtung generierten Lichtverteilung, d.h. die Lichtverteilung besteht aus entsprechend abgebildeten quadratischen Lichtspots SP im Fernfeld. Je nach verwendeter Austrittsoptik kann die Lichtverteilung gegenüber der Gitterstruktur auch auf dem Kopf stehen. In diesem Fall ist die Gitterstruktur aus Fig. 2 um 180° in der Blattebene gedreht. Die quadratischen Flächensegmente 502 führen bei der Beleuchtung durch das Lichtbündel zu einer Lichtstrahlbegrenzung, so dass einer Aufweitung des Lichtbündels entgegengewirkt wird und die Lichtverteilung mit sehr hoher Auflösung und entsprechend hohem Kontrast auf der Straße generiert werden kann. Die Bildung der scharfen Hell-Dunkel-Grenze wird dabei dadurch unterstützt, dass der Verlauf der oberen Kanten der Quadrate mit dem Verlauf der Hell-Dunkel-Grenze übereinstimmt

Um einen Lichtstärkeverlust durch die Gitterstruktur 501 zu vermeiden, ist das Gitter in der Ausführungsform der Fig. 2 reflektierend ausgestaltet, wodurch das durch das Konvertierungsmaterial gestreute Licht in dem entsprechenden quadratischen Flächensegment konzentriert wird. Nichtsdestotrotz besteht gegebenenfalls auch die Möglichkeit, für die Gitterstruktur ein nicht-reflektierendes Material zu verwenden, was einem Beschneiden der auf der Konvertierungsschicht generierten Lichtfläche entspricht.

Die in Fig. 2 dargestellte Gitterstruktur ist lediglich beispielhaft, und es sind Variationen dieser Gitterstruktur möglich. Insbesondere können die einzelnen Flächensegmente auch als andere Arten von Vielecken, wie z.B. Rauten, Dreiecke, Sechsecke und dergleichen, ausgestaltet sein. Ebenso kann das Gitter auch unregelmäßig sein, d.h. die Größe der einzelnen Flächensegmente bzw. Quadrate kann variieren, so dass die Auflösung der Lichtverteilung in verschiedenen Bereichen verändert werden kann.

Wie sich aus den obigen Ausführungen ergibt, werden durch die in Fig. 2 gezeigte Konvertierungsschicht mit Gitterstruktur 501 pixelartige Lichtspots definierter Größe auf der Konvertierungsschicht erzeugt, die dann durch die Austrittsoptik in der Form der Linse 4 (Fig. 1) in eine entsprechende Lichtverteilung auf der Straße abgebildet werden. Die Auflösung des optischen Systems wird dabei durch die Feinheit der Flächensegmente bestimmt. Die Wanddicke der Gitterstruktur ist im Vergleich zu der Größe der Flächensegmente sehr dünn, so dass keine Dunkelzone zwischen zwei benachbarten, auf der Konvertierungsschicht generierten Pixeln erzeugt wird. Durch die Verwendung einer Konvertierungsschicht mit darin integrierter Gitterstruktur können extrem hohe Kontraste zwischen benachbarten Lichtspots in der Lichtverteilung erzeugt werden. Insbesondere können dabei scharfe Hell-Dunkel-Grenzen generiert werden, wie anhand von Fig. 2 für eine Abblendlichtverteilung erläutert wurde.

### Bezugszeichenliste

- 1: Beleuchtungsvorrichtung
- 2: Lichtquelle
- 3: Scanner
- 4: Linse
- 5: Konvertierungsschicht
- 501: Gitterstruktur
- 502: Flächensegment
- L: Lichtbündel
- P, P': Pfeile
- Z: Zwischenbildebene
- F: Fernfeld
- SP: Lichtspot
- O: optische Achse

## Patentansprüche

1. Beleuchtungsvorrichtung für ein Kraftfahrzeug, umfassend eine Lichtquelle (2) aus einer Anzahl von Halbleiterdioden, welche Licht in einem ersten vorbestimmten Wellenlängenbereich erzeugen, sowie eine Konvertierungsschicht (5), auf die ein aus dem Licht der Lichtquelle (2) erzeugtes Lichtbündel (L) fällt und durch welche das Lichtbündel (L) in ein konvertiertes Lichtbündel gewandelt wird, indem das Licht des Lichtbündels (L) über ein Konvertierungsmaterial in einen zweiten vorbestimmten Wellenlängenbereich konvertiert wird, wobei die Beleuchtungsvorrichtung (1) derart ausgestaltet ist, dass aus dem konvertierten Lichtbündel eine vorbestimmte Lichtverteilung in einem Abstand von der Beleuchtungsvorrichtung (1) generiert wird,
wobei in zumindest einem Teilbereich der Fläche der Konvertierungsschicht (5) eine Struktur (501) aus einer oder mehreren Wänden mit einer vorbestimmten Tiefe in Richtung der Dicke der Konvertierungsschicht (5) vorgesehen ist,
wobei die Struktur eine Gitterstruktur (501) aus reflektierenden Gitterwänden und/oder lichtabsorbierenden Gitterwänden ist, wobei durch die Gitterstruktur (501) eine Vielzahl von aneinander angrenzenden Flächensegmenten (502) gebildet wird, welche jeweils Konvertierungsmaterial enthalten und durch Gitterwände begrenzt sind,
**dadurch gekennzeichnet, dass** durch Gitterwände von mehreren aneinander angrenzenden Flächensegmenten (502) eine horizontal verlaufende gerade Grenzlinie und eine daran anschließende schräg verlaufende gerade Grenzlinie gebildet werden, welche in der vorbestimmten Lichtverteilung eine Hell-Dunkel-Grenze darstellen.

2. Beleuchtungsvorrichtung nach einem Anspruch 1, **dadurch gekennzeichnet, dass** die Gitterwände zumindest eines Teils der Gitterstruktur (501) reflektierend sind, insbesondere diffus reflektierend und/oder spiegelnd.

3. Beleuchtungsvorrichtung nach einem der vorhergehenden Ansprüche, **dadurch gekennzeichnet, dass** die Gitterwände zumindest eines Teils der Gitterstruktur (501) lichtabsorbierend sind.

4. Beleuchtungsvorrichtung nach einem der vorhergehenden Ansprüche, **dadurch gekennzeichnet, dass** Gitterwände zumindest eines Teils der Gitterstruktur (501) aus metallischem Material gebildet sind oder eine metallische Beschichtung aufweisen.

5. Beleuchtungsvorrichtung nach einem der vorhergehenden Ansprüche, **dadurch gekennzeichnet, dass** die Flächensegmente (502) in Draufsicht auf die Konvertierungsschicht (5) Vielecke, insbesondere Rechtecke und/oder Quadrate und/oder Dreiecke und/oder Rauten und/oder Sechsecke, darstellen.

6. Beleuchtungsvorrichtung nach einem der vorhergehenden Ansprüche, **dadurch gekennzeichnet, dass** die maximale Ausdehnung eines jeweiligen Flächensegments (501) in Draufsicht auf die Konvertierungsschicht (5) zwischen 5 µm und 500 µm liegt.

7. Beleuchtungsvorrichtung nach einem der vorhergehenden Ansprüche, **dadurch gekennzeichnet, dass** die Wandstärke der Gitterwände der Gitterstruktur (501) 20% oder weniger der maximalen Ausdehnung der jeweiligen Flächensegmente (501) in Draufsicht auf die Konvertierungsschicht (5) beträgt.

8. Beleuchtungsvorrichtung nach einem der vorhergehenden Ansprüche, **dadurch gekennzeichnet, dass** die Tiefe der Gitterwände zwischen 50 µm und 500 µm liegt.

9. Beleuchtungsvorrichtung nach einem der vorhergehenden Ansprüche, **dadurch gekennzeichnet, dass** die Anzahl von Halbleiterdioden der Lichtquelle (2) eine oder mehrere Laserdioden umfasst.

10. Beleuchtungsvorrichtung nach einem der vorhergehenden Ansprüche, **dadurch gekennzeichnet, dass** die Anzahl von Halbleiterdioden monochromatisches Licht erzeugt, so dass das Lichtbündel (L), welches auf die Konvertierungsschicht (5) fällt, aus monochromatischem Licht besteht.

11. Beleuchtungsvorrichtung nach einem der vorhergehenden Ansprüche, **dadurch gekennzeichnet, dass** die Konvertierungsschicht (5) derart ausgestaltet ist, dass das Lichtbündel (L) durch die Konvertierungsschicht (5) in ein konvertiertes Lichtbündel aus Weißlicht gewandelt wird.

12. Beleuchtungsvorrichtung nach einem der vorhergehenden Ansprüche, **dadurch gekennzeichnet, dass** die Konvertierungsschicht (5) eine Phosphorkonvertierungsschicht ist, welche insbesondere Nitrid-Phosphor oder Oxidnitrid-Phosphor oder Cerium-dotierten YAG-Phosphor umfasst.

13. Beleuchtungsvorrichtung nach einem der vorhergehenden Ansprüche, **dadurch gekennzeichnet, dass** zwischen Lichtquelle (2) und Konvertierungsschicht (5) ein Scanner (3) vorgesehen ist, der im Betrieb die Lage des Lichtbündels (L) verändert und hierdurch einen durch das Lichtbündel (L) erzeugten Lichtspot (SP) zur Generierung der vorbestimmten Lichtverteilung bewegt.

14. Beleuchtungsvorrichtung nach einem der vorhergehenden Ansprüche, **dadurch gekennzeichnet, dass** die Beleuchtungsvorrichtung (1) eine optische Einrichtung (4) umfasst, welche in Richtung des Strahlverlaufs des Lichtbündels (L) hinter der Konvertierungsschicht (5) vorgesehen ist und welche das konvertierte Lichtbündel entsprechend der vorbestimmten Lichtverteilung abbildet.

15. Beleuchtungsvorrichtung nach einem der vorhergehenden Ansprüche, **dadurch gekennzeichnet, dass** die Beleuchtungsvorrichtung (1) eine Signalleuchte und/oder einen Scheinwerfer umfasst.

16. Beleuchtungsvorrichtung nach einem der vorhergehenden Ansprüche, **dadurch gekennzeichnet, dass** die Beleuchtungsvorrichtung (1) einen Scheinwerfer umfasst und derart ausgestaltet ist, dass im Betrieb als vorbestimmte Lichtverteilung eine Abblendlichtcharakteristik und/oder eine Fernlichtcharakteristik generiert wird.

17. Beleuchtungsvorrichtung nach einem der vorhergehenden, **dadurch gekennzeichnet, dass** sich das Konvertierungsmaterial und/oder die Dicke der Konvertierungsschicht (5) in zumindest einem Teil der Flächensegmente (502) von anderen Flächensegmenten (502) unterscheidet.

18. Kraftfahrzeug, umfassend eine oder mehrere Beleuchtungsvorrichtungen (1) nach einem der Ansprüche 1 bis 17.

## Claims

1. An illumination device for a motor vehicle, comprising a light source (2) formed from a number of semiconductor diodes which produce light in a first predetermined wavelength range, and also a conversion layer (5) onto which a light beam (L) produced from the light of the light source (2) falls and by which the light beam (L) is changed into a converted light beam in that the light of the light beam (L) is converted by way of a conversion material into a second predetermined wavelength range, wherein the illumination device (1) is configured such that a predetermined light distribution is generated at a distance from the illumination device (1) from the converted light beam,
wherein in at least a partial region of the surface of the conversion layer (5) a structure (501) comprising one or more walls with a predetermined depth is provided in the direction of the thickness of the conversion layer (5),
wherein the structure is a grid structure (501) formed of reflective grid walls and/or light-absorbing grid walls, wherein a multiplicity of surface segments (502) which adjoin one another is formed by the grid structure (501) which in each case contain conversion material and are delimited by grid walls,
**characterised in that** a horizontally-running straight boundary line and an obliquely-running straight boundary line adjoining it are formed by grid walls of a plurality of surface segments (502) which adjoin one another, which boundary lines represent a light/dark boundary in the predetermined light distribution.

2. An illumination device according to Claim 1, **characterised in that** the grid walls at least of part of the grid structure (501) are reflective, especially diffusely reflective and/or specular.

3. An illumination device according to one of the preceding claims, **characterised in that** the grid walls at least of part of the grid structure (501) are light-absorbing.

4. An illumination device according to one of the preceding claims, **characterised in that** grid walls at least of part of the grid structure (501) are formed from metallic material or have a metallic coating.

5. An illumination device according to one of the preceding claims, **characterised in that** the surface segments (502), in a top view of the conversion layer (5), represent polygons, especially rectangles and/or squares and/or triangles and/or rhombi and/or hexagons.

6. An illumination device according to one of the preceding claims, **characterised in that** the maximum extent of a respective surface segment (501), in a top view of the conversion layer (5), lies between 5 µm and 500 µm.

7. An illumination device according to one of the preceding claims, **characterised in that** the wall thickness of the grid walls of the grid structure (501) is 20% or less of the maximum extent of the respective surface segments (501), in a top view of the conversion layer (5).

8. An illumination device according to one of the preceding claims, **characterised in that** the depth of the grid walls is between 50 µm and 500 µm.

9. An illumination device according to one of the preceding claims, **characterised in that** the number of semiconductor diodes of the light source (2) comprises one or more laser diode(s).

10. An illumination device according to one of the preceding claims, **characterised in that** the number of semiconductor diodes produces monochromatic light, so that the light beam (L) which falls on the conversion layer (5) consists of monochromatic light.

11. An illumination device according to one of the preceding claims, **characterised in that** the conversion layer (5) is configured such that the light beam (L) is converted by the conversion layer (5) into a converted light beam composed of white light.

12. An illumination device according to one of the preceding claims, **characterised in that** the conversion layer (5) is a phosphorus conversion layer which comprises especially nitride phosphor or oxynitride phosphor or cerium-doped YAG phosphor.

13. An illumination device according to one of the preceding claims, **characterised in that** a scanner (3) is provided between the light source (2) and conversion layer (5), which scanner during operation changes the position of the light beam (L) and thereby moves a light spot (SP) produced by the light beam (L) to generate the predetermined light distribution.

14. An illumination device according to one of the preceding claims, **characterised in that** the illumination device (1) comprises an optical means (4) which in the direction of the beam path of the light beam (L) is provided behind the conversion layer (5) and which images the converted light beam corresponding to the predetermined light distribution.

15. An illumination device according to one of the preceding claims, **characterised in that** the illumination device (1) comprises an indicator light and/or a headlight.

16. An illumination device according to one of the preceding claims, **characterised in that** the illumination device (1) comprises a headlight and is configured such that in operation a dipped headlight characteristic and/or a main beam characteristic is generated as the predetermined light distribution.

17. An illumination device according to one of the preceding claims, **characterised in that** the conversion material and/or the thickness of the conversion layer (5) differs from other surface segments (502) in at least one part of the surface segments (502).

18. A motor vehicle, comprising one or more illumination devices (1) according to one of Claims 1 to 17.

## Revendications

1. Dispositif d'éclairage destiné à un véhicule automobile comprenant une source de lumière (2) constituée par une série de diodes à semi-conducteurs qui produisent de la lumière dans une première plage de longueurs d'onde prédéfinie ainsi qu'une couche de conversion (5) sur laquelle tombe, un faisceau de lumière (L) produit à partir de la lumière de la source de lumière (2), et par l'intermédiaire de laquelle le faisceau de lumière (L) est converti en un faisceau de lumière transformé du fait que la lumière du faisceau de lumière (L) est convertie par l'intermédiaire d'un matériau de conversion dans une seconde plage de longueurs d'onde prédéfinie, le dispositif d'éclairage (1) étant réalisé de façon à obtenir à partir du faisceau de lumière transformé, une distribution prédéfinie de la lumière à distance du dispositif d'éclairage (1), dans au moins une zone partielle de la surface de la couche de conversion (5) étant prévue une structure (501) constituée par une ou plusieurs parois ayant une profondeur prédéfinie en direction de l'épaisseur de la couche de conversion (5),
la structure étant une structure de réseau (501) constituée par des parois de réseau réfléchissantes et/ou des parois de réseau absorbant la lumière, la structure de réseau (501) permettant de former une série de segments de surface adjacents (502) qui comportent chacun un matériau de conversion et sont délimités par des parois du réseau,
**caractérisé en ce que**
des parois de réseau de plusieurs segments de surface (502) adjacents permettent d'obtenir, une droite s'étendant horizontalement et une droite de délimitation s'étendant obliquement connectée à celle-ci qui représentent dans la distribution de la lumière prédéfinie une limite clair-obscur.

2. Dispositif d'éclairage conforme à la revendication 1,
**caractérisé en ce que**
les parois de réseau d'au moins une partie de la structure de réseau (501) sont réfléchissantes, en particulier présentent une réflexion diffuse et/ou en miroir.

3. Dispositif d'éclairage conforme à l'une des revendications précédentes,
**caractérisé en ce que**
les parois de réseau d'au moins une partie de la structure de réseau (501) absorbent la lumière.

4. Dispositif d'éclairage conforme à l'une des revendications précédentes,
**caractérisé en ce que**
des parois de réseau d'au moins une partie de la structure de réseau (501) sont réalisées en un matériau métallique ou comportent un revêtement métallique.

5. Dispositif d'éclairage conforme à l'une des revendications précédentes,
**caractérisé en ce que**
les segments de surface (502) définissent en vue de dessus sur la couche de conversion (5) des polygones, en particuliers des rectangles et/ou des carrés et/ou des triangles et/ou des losanges et/ou des hexagones.

6. Dispositif d'éclairage conforme à l'une des revendications précédentes,
**caractérisé en ce que**
l'extension maximum de chaque segment de surface (501) est comprise entre 5 µm et 500 µm en vue de dessus sur la couche de conversion (5).

7. Dispositif d'éclairage conforme à l'une des revendications précédentes,
**caractérisé en ce que**
l'épaisseur des parois du réseau de la structure de réseau (501) est égale à 20% ou moins de l'extension maximum de chaque segment de surface (501) en vue de dessus sur la couche de conversion (5).

8. Dispositif d'éclairage conforme à l'une des revendications précédentes,
**caractérisé en ce que**
la hauteur des parois du réseau est située entre 50 µm et 500 µm.

9. Dispositif d'éclairage conforme à l'une des revendications précédentes,
**caractérisé en ce que**
les diodes à semi-conducteurs de la source de lumière (2) comportent une ou plusieurs diode(s) laser.

10. Dispositif d'éclairage conforme à l'une des revendications précédentes,
**caractérisé en ce que**
les diodes à semi-conducteurs produisent de la lumière monochromatique de sorte que le faisceau de lumière (L) qui tombe sur la couche de conversion (5) sont constitué de lumière monochromatique.

11. Dispositif d'éclairage conforme à l'une des revendications précédentes,
**caractérisé en ce que**
la couche de conversion (5) est réalisée de sorte que le faisceau de lumière (L) soit converti au travers de cette couche de conversion (5) en un faisceau de lumière transformé constitué par de la lumière blanche.

12. Dispositif d'éclairage conforme à l'une des revendications précédentes,
**caractérisé en ce que**
la couche de conversion (5) est une couche de conversion à base de phosphore qui comprend, en particulier, du phosphore nitruré ou du phosphore oxydé nitruré ou du phosphore YAG dopé au cérium.

13. Dispositif d'éclairage conforme à l'une des revendications précédentes,
**caractérisé en ce qu'**
entre la source de lumière (2) et la couche de conversion (5) il est positionné un scanner (3) qui, en cours de fonctionnement modifie la position du faisceau de lumière (L) et déplace ainsi le spot de lumière (SP) produit par le faisceau de lumière (L) pour obtenir la distribution de lumière prédéfinie.

14. Dispositif d'éclairage conforme à l'une des revendications précédentes,
**caractérisé en ce qu'**
il comporte un dispositif optique (4) qui est positionné dans la direction de la propagation des rayons du faisceau lumineux (L) à l'arrière de la couche de conversion (5) et met en forme le faisceau de lumière transformé conformément à la distribution de la lumière prédéfinie.

15. Dispositif d'éclairage conforme à l'une des revendications précédentes,
**caractérisé en ce qu'**
il est constitué par un feu de signalisation et/ou un phare.

16. Dispositif d'éclairage conforme à l'une des revendications précédentes,
**caractérisé en ce qu'**
il est constitué par un phare et est réalisé de sorte qu'en cours de fonctionnement, il génère en tant que distribution prédéfinie, de la lumière ayant une caractéristique de feu de croisement et/ou une caractéristique de feu de route.

17. Dispositif d'éclairage conforme à l'une des revendications précédentes,
**caractérisé en ce que**
le matériau de conversion et/ou l'épaisseur de la couche de conversion (5) est(sont) différent(es) dans au moins une partie des segments de surface (502) par rapport à d'autres segments de surface (502).

18. Véhicule comprenant au moins un dispositif d'éclairage (1) conforme à l'une des revendications 1 à 17.
